# EUROPEAN PATENT SPECIFICATION

(11) **EP 1 935 603 B1**
(45) Date of publication and mention of the grant of the patent: **09.02.2011**
(21) Application number: 07255000.7
(22) Date of filing: 21.12.2007
(51) Int. Cl.: B29C 37/00, E06B 3/20, B29C 70/46

(54) **Methods of forming a door skin**
Verfahren zur Erzeugung einer Türbeschichtung
Procédés de formation d'enveloppe extérieure de porte

(30) Priority: 21.12.2006 US 871226 P; 23.12.2006 GB 0625885
(43) Date of publication of application: 25.06.2008
(73) Proprietor: LSSD UK Limited, Straight Road Short Heath, Willenhall West Midlands, WV12 5RA (GB)
(72) Inventor: Hodges, David Kenneth, Worcestershire, WR14 2RT (GB); Conroy, Vincent, Devon, EX13 7BN (GB)
(74) Representative: Lambert, Ian Robert

(56) References cited:
- EP-A- 0 727 304
- WO-A-92/18341
- DE-A1- 10 309 811
- DE-U1-202006 013 838
- GB-A- 2 163 993
- US-A- 4 076 788

## Description

This invention relates to methods of forming a door skin.

It is known from, for example, GB 2267529 to utilise pairs of plastic door skins in the manufacture of doors. The door skins are mounted on a frame, and panels of a suitable material are located within the frame between the door skins. In this way, doors are provided that are convenient and economical to manufacture. It is highly desirable to provide such doors with a suitable surface finish, which *inter alia* should have acceptable physical and aesthetic qualities. Typically, the finish coating is applied in a separate step after the moulding of the door skins. Such post-production treatments are generally undesirable, since they represent an extra and time consuming manufacturing step. It is known to mould door skins from sheet moulding compound (SMC) in a method in which powder is sprayed onto the mould part which is subsequently brought into contact with the SMC in order to produce a primer coating thereon. However, a subsequent finish paint coating is required. Furthermore, the process is costly, and can cause bowing of the door skin due to the different tensions that the skin is subjected to as a result of the process.

GB 2163993A describes in-mould coating of compression moulded plastic parts, such as automotive body panels, which utilises a SMC material and a coating material. DE 10309811A1 discloses a method for producing fibre reinforced plastics having a film top coat produced in an in-mould process. International Publication No. WO 92/18341 discloses a method of forming mouldings such as panels and doors with a simulated wood-grain surface. DE 202006013838 U1 discloses a method of manufacturing a GRP (glass reinforced plastics) window frame. EP 0727304A discloses a method of making a sandwich-type structural element such as a door or a wall element which involves the application of a gelcoat coating to a mould, followed by the application of a layer of a fibrous reinforcing material to the gelcoat coating once the gelcoat coating is partially hardened. A solid core of the structural element is placed on the reinforcing material, and a moulding process is performed.

The present invention, in at least some of its embodiments, addresses the above described problems, and provides a convenient and cost effective way of providing a coating on a door skin.

According to the invention there is provided a method of forming a door skin for use in the production of doors for buildings, such as houses or commercial buildings, including the steps of:
introducing a sheet moulding compound (SMC) into a mould;
moulding and at least partially curing the SMC to produce a skin having substantially the dimensions and external appearance of a door, and thereafter introducing an in-mould coating (IMC) composition to the mould;
causing, at least partially through applied pressure, the IMC composition to spread across a surface of the skin; and
curing the IMC composition to produce a cured door skin having a cured coating thereon, in which, the IMC composition is cured to provide a top coat.

By "top coat" it is meant that a finish is obtained that is at least equivalent to the finish obtained by applying a top coat of a suitable conventional paint to a cured door skin, and that it is not necessary to apply a further top coat to the door skin. It is most preferred that the IMC composition is curable to provide a high quality gloss finish. By "high quality gloss finish" it is meant that the cured IMC provides a finish at least equivalent to the finish provided by painting door skins with a conventional gloss paint in a typical prior art post-mould painting step.

Typically, the IMC composition is a thermosetting resin. Advantageously, the IMC composition includes a styrene monomer.

Preferably, the SMC is moulded by compression moulding. In such embodiments, the mould may include a pair of mould members and the compression moulding may include applying a pressure to the mould members; the step of introducing an IMC composition may include reducing the pressure applied to the pair of mould members and injecting the IMC composition into the mould; and the step of causing the IMC composition to spread across a surface of the skin may include increasing the pressure applied to the pair of mould members. The reduction in the pressure may cause a slight separation of the pair of mould members, and conversely the increase in the applied pressure during the step of causing the IMC composition to spread across a surface of the skin may act to close the mould by bringing the pair of mould members into contact. However, the separation under practical conditions is typically very small and is likely difficult or impossible to detect without specialist measurement techniques. Suitable IMC compositions are manufactured by Omnova Solutions, Inc, of Fairlawn, Ohio, USA under the trade name Stylecoat (RTM). The Stylecoat (RTM) series 7100 IMC composition is particularly suited to compression moulding applications. Further IMC compositions and compression moulding techniques that may be used in the present invention can be found in EP 0854157, US 4552913, US 4239808 and US 4552913.

In other embodiments, the SMC is moulded by injection moulding. Stylecoat (RTM) series 8000 and 9000. IMC compositions are particularly suited to injection moulding applications. Further IMC compositions and injection moulding techniques that may be used in the present invention can be found in International Publication WO 2004/041503.

The invention is particularly suited for the convenient manufacture of door skins for use in the production of doors for buildings, such as houses or commercial buildings. The door skin may be rectangular.

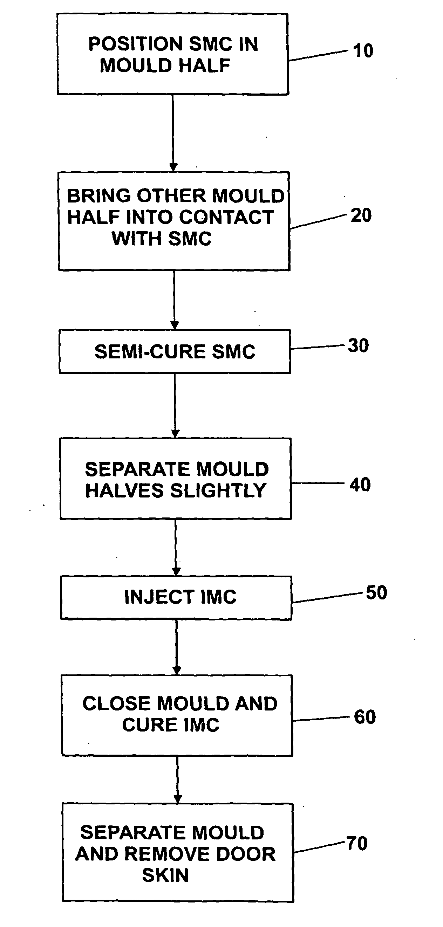

Methods in accordance with the invention will now be described with reference to the accompanying drawing, which is a schematic diagram showing a method of the invention.

The invention comprises moulding a door skin from SMC, which has also been referred to GRP (glass reinforced plastic) or FRP (fibre reinforced plastic). In a typical embodiment, the SMC comprises two layers of a thermosetting resin, such as a polyester resin, which sandwich glass fibres of an appropriate size, e.g. around 25 mm. Typically, the glass fibre comprises 20 to 45% of the SMC compound (by weight). As represented at 10 in the drawing, the SMC is positioned in a mould half. As indicated at 20, the other mould half is brought into contact with the SMC, the two mould halves defining a mould cavity corresponding to the desired shape of the door skin. Typically this is a rectangular shape of dimensions suitable for domestic use. The door skin may have decorative panels and recesses formed therein as desired. The second mould half is attached to a hydraulic press or otherwise equipped so as to apply a suitable pressure to the SMC. Representative pressures are in the range 4 - 1400 tonnes. Furthermore, the mould is provided with heating means to enable the mould temperature to be set so as to enable the thermosetting resin in the SMC to semi-cure under the conditions of temperature and pressure, as depicted as 30.

As depicted at 40, once the thermosetting resin in the SMC has semi-cured to an acceptable extent, the applied pressure is relaxed, and the mould halves are caused to separate slightly. As depicted at 50, IMC is then injected into the mould cavity at high pressure using an injection nozzle provided in the second mould so that a charge of IMC is present in the mould cavity between the second mould half and a face of the semi-cured SMC. As depicted at 60, the mould halves are brought into contact so as to close the mould, and pressure is reapplied to the SMC. This pressure causes the IMC to be spread over the face of the SMC directly underneath the second mould half, thereby producing a coating thereon. The IMC is a thermosetting resin which is cured under the heat and pressure conditions utilised. Additionally, the SMC is fully cured under these conditions. Subsequently, as shown at 70, the mould halves are separated and the cured door skin, having a cured surface coating thereon, is removed from the mould.

The process of the invention is convenient and economical. A further benefit of manufacturing door skins using SMC and IMC is that both of these elements cross-link to provide a very strong bond, thereby providing a robust coating. This is advantageous, since the doors eventually produced from such door skins are frequently subjected to external stresses through mistreatment and abuse. Particularly preferred examples of IMCs comprise the Stylecoat (RTM) series 7100 IMCs produced by Omnova Solutions Inc. Door skins having high quality top coatings may be provided using the in mould coating technique of the present invention which do not require a further, post-mould coating treatment.

For example, it is possible to cause relative lateral motion of the mould halves in order to assist in the spreading of the IMC across the surface of the semi-cured door skin. Although it is preferred that compression moulding is utilised to produce the door skin, it is possible to utilise another moulding technique such as injection moulding.

## Claims

1. A method of forming a door skin for use in the production of doors for buildings, such as houses or commercial buildings, including the steps of:
introducing a sheet moulding compound into a mould (10);
moulding and at least partially curing the sheet moulding compound to produce a skin having substantially the dimensions and external appearance of a door (30), and thereafter introducing an in-mould coating composition to the mould (50);
causing, at least partially through applied pressure, the in-mould coating composition to spread across a surface of the skin; and
curing the SMC composition to produce a cured door skin having a cured coating thereon, in which in which the in-mould coating composition is cured to provide a top coat (60).

2. A method according to claim 1 in which the in-mould coating composition is a thermosetting resin.

3. A method according to claim 2 in which the in-mould coating composition includes a styrene monomer.

4. A method according to any one of claims 1 to 3 in which the sheet moulding compound is moulded by compression moulding.

5. A method according to claim 4 in which: the mould includes a pair of mould members and the compression moulding includes applying a pressure to the mould members; the step of introducing an in-mould coating composition (50) includes slightly reducing the pressure applied to the mould members and injecting the in-mould coating composition into the mould; and the step of causing the in-mould coating composition to spread across a surface of the skin includes increasing the pressure applied to the mould members.

6. A method according to any one of claims 1 to 3 in which the sheet moulding compound is moulded by injection moulding.

7. A method according to any previous claim in which the door skin is rectangular.

## Patentansprüche

1. Verfahren zur Erzeugung einer Türschale bei der Herstellung von Türen für Gebäude, beispielsweise Häusern oder Geschäftsbauten, umfassend die folgenden Schritte: Einführen einer Folienpreß-Verbindung in eine Form (10); Pressen und wenigstens teilweise Aushärten der Folienpreß-Verbindung zur Erzeugung einer Schale, die im wesentlichen die Abmessungen sowie die äußere Erscheinung einer Tür (30) aufweist, und danach Einleiten einer Form-Innenbeschichtungsmasse in die Form (50); Veranlassen, daß sich die Form-Innenbeschichtungsmasse wenigstens teilweise durch einwirkenden Druck über eine Oberfläche der Schale ausbreitet; und Aushärten der Form-Innenbeschichtungsmasse zur Erzeugung einer ausgehärteten Türschale mit einer auf ihr befindlichen ausgehärteten Beschichtung, wobei die Form-Innenbeschichtungsmasse zur Erzeugung einer äußeren Beschichtung (60) ausgehärtet wird.

2. Verfahren nach Anspruch 1, **dadurch gekennzeichnet, daß** die Form-Innenbeschichtungsmasse ein in Wärme aushärtendes Kunstharz ist.

3. Verfahren nach Anspruch 2, **dadurch gekennzeichnet, daß** die Form-Innenbeschichtungsmasse ein Styrol-Monomer ist.

4. Verfahren nach einem der Ansprüche 1 bis 3, **dadurch gekennzeichnet, daß** die Form-Innenbeschichtungsmasse durch Druckgießen geformt wird.

5. Verfahren nach Anspruch 4, **dadurch gekennzeichnet, daß** die Gießform ein Paar Formkörper aufweist und daß beim Druckgießen auf die Formkörper ein Druck ausgeübt wird, wobei zum Schritt der Einführung der Form-Innenbeschichtungsmasse (50) ein geringes Reduzieren des Druckes gehört, der auf die Formkörper ausgeübt wird, sowie das Einspritzen der Form-Innenbeschichtungsmasse in die Gießform, und daß zu dem Schritt, der bewirkt, daß sich die Form-Innenbeschichtungsmasse auf einer Oberfläche der Schale der Form-Innenbeschichtung ausbreitet, gehört, daß der auf die Formkörper ausgeübte Druck erhöht wird.

6. Verfahren nach einem der Ansprüche 1 bis 3, **dadurch gekennzeichnet, daß** die Folienpreß-Verbindung durch Spritzgießen gepreßt wird.

7. Verfahren nach einem der vorhergehenden Ansprüche, **dadurch gekennzeichnet, daß** der Tür-Schale rechtwinklig ist.

## Revendications

1. - Procédé de mise en forme d'une enveloppe extérieure de porte destinée à être utilisée dans la production de portes pour des bâtiments, tels que des habitations ou des bâtiments commerciaux, lequel procédé comprend les étapes consistant à :
- introduire un mélange à mouler en feuille dans un moule (10) ;
- mouler et faire durcir au moins partiellement le mélange à mouler en feuille pour produire une enveloppe extérieure ayant sensiblement les dimensions et l'aspect externe d'une porte (30), puis introduire dans le moule (50) une composition de revêtement dans le moule ;
- amener, au moins en partie par une pression appliquée, la composition de revêtement dans le moule à s'étendre sur une surface de l'enveloppe extérieure ; et
- faire durcir la composition de mélange à mouler en feuille pour produire une enveloppe extérieure de porte durcie ayant un revêtement durci sur celle-ci, dans laquelle la composition de revêtement dans le moule est durcie pour former une couche de finition (60).

2. - Procédé selon la revendication 1, dans lequel la composition de revêtement dans le moule est une résine thermodurcissable.

3. - Procédé selon la revendication 2, dans lequel la composition de revêtement dans le moule comprend un monomère de styrène.

4. - Procédé selon l'une quelconque des revendications 1 à 3, dans lequel le mélange à mouler en feuille est moulé par moulage par compression.

5. - Procédé selon la revendication 4, dans lequel : le moule comprend une paire d'éléments de moule et le moulage par compression comprend l'application d'une pression sur les éléments de moule ; l'étape d'introduction d'une composition de revêtement dans le moule (50) comprend une légère réduction de la pression appliquée sur les éléments de moule et une injection dans le moule de la composition de revêtement dans le moule ; et l'étape consistant à amener la composition de revêtement dans le moule à s'étendre sur une surface de l'enveloppe extérieure comprend une augmentation de la pression appliquée sur les éléments de moule.

6. - Procédé selon l'une quelconque des revendications 1 à 3, dans lequel le mélange à mouler en feuille est moulé par moulage par injection.

7. - Procédé selon l'une quelconque des revendications précédentes, dans lequel l'enveloppe extérieure de porte est rectangulaire.
